# EUROPÄISCHE PATENTSCHRIFT

(11) **EP 1 453 890 B1**
(45) Veröffentlichungstag und Bekanntmachung des Hinweises auf die Patenterteilung: **23.03.2011**
(21) Anmeldenummer: 02781040.7
(22) Anmeldetag: 03.12.2002
(51) Int. Cl.: C08J 3/12, B29B 9/00, B29B 9/12, B29B 13/00, B01J 2/04, B01J 2/18

(54) **HERSTELLEN KUGELFÖRMIGER PARTIKEL AUS EINER SCHMELZE AUS KUNSTSTOFF**
PRODUCTION OF SPHERICAL PARTICLES FROM A MELTED MASS OF PLASTIC
PRODUCTION DE PARTICULES SPHERIQUES A PARTIR D'UNE MASSE DE PLASTIQUE EN FUSION

(43) Veröffentlichungstag der Anmeldung: 08.09.2004
(73) Patentinhaber: Bühler AG, 9240 Uzwil (CH)
(72) Erfinder: CULBERT, Brent-Allen, CH-9500 Wil (CH); CHRISTEL, Andreas, CH-9524 Zuzwil (CH); KRUMPHOLZ, Erhard, CH-9244 Niederuzwil (CH); JÜRGENS, Theodor, 44581 Casstrop-Rauxel (DE); GEIER, Rudolf, 45130 Essen (DE)
(74) Vertreter: Wilming, Martin
(86) Internationale Anmeldenummer: PCT/CH2002/000653
(87) Internationale Veröffentlichungsnummer: WO 2003/054063

(56) Entgegenhaltungen:
- WO-A-00/24809
- WO-A-02/18113
- WO-A-95/13176

## Beschreibung

Die Erfindung bezieht sich auf ein Verfahren zur Herstellung kugelförmiger Partikel aus einer Schmelze aus Kunststoff, insbesondere Prepolymer- bzw. Polymerschmelze eines Polykondensates, z.B. PET, PBT, PEN, PA oder PC aus polyfunktionellen Carbonsäuren und Alkoholen, wobei die Schmelze mittels einer Vertropfungsdüse zu Tropfen vertropft wird und die Tropfen nach Durchfallen zumindest eines Teils einer Fallstrecke zu Partikeln verfestigt werden.

Zur Herstellung von PET-Granulat ist es bekannt, ein Prekondensat nach der Veresterung bzw. Umesterung und Prepolykondensation von Ethylenglykol bzw. Butandiol im PBT-Prozess und Terephthalsäure einem mit Unterdruck beaufschlagtem Reaktor zuzuführen. Hierdurch soll einerseits die Viskosität des weitgehend flüssigen und kurzkettigen Polymers erhöht und andererseits freiwerdendes Ethylenglykol bzw. Butandiol der Veresterung bzw. Umesterung wieder zugeführt werden. Nach der Reaktorbehandlung wird das Polykondensat in Wasser abgekühlt und zu Granulat geschnitten, um zylindrische Pellets zu erhalten, die weitgehend amorph sind. Allerdings ist der Nachteil gegeben, dass die Enden Ansätze aufweisen, die abbrechen und somit zu einer Staubentwicklung führen können. Nachteil des bekannten Verfahrens ist es des Weiteren, dass die Pellets nach ihrer Granulierung in einem weitgehend amorphen Zustand vorliegen, der in einer nachgeschalteten getrennten Behandlungsstufe eine Teilkristallisierung erforderlich macht. Ferner stört der anlagentechnische und energetische Aufwand, da besondere Behandlungsstufen wie unterdruckbeaufschlagte Reaktorstufe und Teilkristallisation erforderlich sind.

Um diese Nachteile zu vermeiden, wird nach der DE 198 49 485 A1 vorgeschlagen, dass schmelzflüssiges Prekondensat einem Fallturm mit einer im Kopfbereich vorhandenen Verteilertropfdüse zugeführt wird, wobei das aus der Verteilertropfdüse austretende Prekondensat in dem Fallturm im Gegenstrom einem Inertgas wie Stickstoff ausgesetzt wird. Hierdurch wird die Fallgeschwindigkeit bei gleichzeitiger Beschleunigung einer Kristallisation der Tropfen reduziert. Die am Boden des Fallturms austretenden Partikel können als getrocknete und teilkristallisierte Pellets sodann einer Nachkondensation bzw. SSP zugeführt werden.

Ein entsprechendes Verfahren ist auch der DE 100 19 508 A1 zu entnehmen. Dabei werden die Tropfen im Gegenstrom mit Luft oder Inertgas wie Stickstoff beaufschlagt.

Um flüssiges PET-Prepolymer von etwa 280 °C auf 160 °C abzukühlen und somit die günstige Kristallisationsgeschwindigkeit, die im Bereich zwischen 150 °C und 170 °C liegt, zu erreichen, müssen einem Kilogramm PET-Kügelchen mehr als 220 KJ/Kg Wärme entzogen werden. Da die üblicherweise zum Einsatz gelangenden Gase wie Luft oder Stickstoff nur eine geringe Wärmekapazität (in etwa 1,05 KJ/Kg) aufweisen, sind trotz Anwendung grosser Temperaturdifferenzen, um die Wärme aufzunehmen, relativ grosse Massen- und Volumenströme des Gases erforderlich, um die flüssigen heissen Polymertröpfchen abzukühlen. Nachteilig ist des Weiteren, dass der Wärmeübergang von einem Gas auf einen Feststoff relativ schlecht ist, so dass sich relativ hohe Fallstrecken ergeben und eine definierte Abkühlung bzw. Tropfentemperatur nach einer bestimmten Fallhöhe nur schwer einstellbar ist.

Ein Gas, welches zum Beispiel von 50 °C auf 200 °C erwärmt wird, kann insgesamt etwa 160 KJ/Kg Gas aufnehmen. Somit wird ein Gasstrom von in etwa 1,4 Kg Gas/Kg PET bzw. 1.400 m³ Gas/1.000 Kg PET benötigt. Dies bedeutet zum Beispiel bei einem Vertropfen von 1 t PET pro Stunde in einen Fallturm mit einem Durchmesser von 1,2 m, dass ein Gasstrom von mindestens 1.400 m³/h benötigt wird.

Ein Nachteil der grossen Gasmengen ist des Weiteren, dass Turbulenzen und zumindest störende Querströmungen auftreten, so dass die Gefahr besteht, dass die überaus klebrigen Kügelchen, die Durchmesser in der Grössenordnung von 0,8 mm aufweisen können, die Wände des Fallrohres berühren und festkleben oder auch untereinander festkleben bzw. so deformiert werden, dass die Endgeometrie nicht die gewünschte Kugelform aufweist.

Um aus Kunststoff bestehende Kugeln gleichmässiger Geometrie herzustellen, wird nach der DE 43 38 212 C2 vorgeschlagen, dass Kunststoff in schmelzflüssiger Konsistenz durch Schwingungsanregung einer Düseneinrichtung vertropft wird, wobei die so hergestellten Tropfen in einer Flüssigkeit abgekühlt werden.

Der vorliegenden Erfindung liegt das Problem zugrunde, ein Verfahren der eingangs genannten Art so weiterzubilden, dass die eingangs genannte Kunststoffschmelze, insbesondere schmelzflüssiges Prepolymer bzw. Polymer eines Kondensates, mit einem gewünschten hohen Durchsatz vertropft werden kann, ohne dass die Gefahr der Deformation bzw. des Verklebens der vertropften Partikel bzw. des Verklebens der vertropften Partikel untereinander und/oder Ankleben der Partikel an Begrenzungen der Fallstrecke selbst besteht. Nach einem weiteren Aspekt der Erfindung soll ausserdem die Gesamtzeit, innerhalb der die vertropften Partikel im hinreichenden Umfang nachkondensiert sind, im Vergleich zu bekannten Verfahren erheblich verkürzt werden.

Verfahrensmässig wird das Problem unter anderem dadurch gelöst, dass die Partikel am Ende der Fallstrecke in einen Aufnahmebereich gelangen, in dem zumindest ein Teil der Partikel derart verwirbelt wird, dass Turbulenzen zum Bewegen der Partikel in Richtung Bereichsmitte entstehen, und dass die Partikel in der Fallstrecke mit einer Flüssigkeit beaufschlagt werden.

Unter dem Begriff "verwirbelt" soll sowohl eine vorwiegend stochastische (ungeordnete) Bewegung der Partikel - im Sinne einer Fluidisierung - als auch eine vorwiegend kollektive (geordnete) Bewegung der Partikel verstanden werden, wobei hiermit natürlich auch kombinierte Bewegungszustände des "Partikelschwarmes" mit einem stochastischen Anteil und einem kollektiven Anteil des Bewegungsmusters enthalten sind.

Unter dem Begriff "verfestigt" sollen in der folgenden Beschreibung im wesentlichen formstabile amorphe und/oder kristalline Partikel gemeint sein.

Vorzugsweise werden in dem Aufnahmebereich die Partikel durch Vibrieren zumindest eines Teils des Aufnahmebereichs verwirbelt.

Die Verwirbelung der Partikel in dem Aufnahmebereich kann auch durch Einblasen eines Gases durch eine Vielzahl von Begasungslöchern erfolgen.

Bei einer speziellen Ausführung des erfindungsgemässen Verfahrens werden die Partikel in dem Aufnahmebereich mittels eines durch Gas durchsetzen und in Schwingungen versetzten tuchartigen Elements verwirbelt und/oder einem Bereich mit einem eigensteifen Element am Ende der Fallstrecke zugeführt, der von Gas derart beaufschlagt wird, dass Turbulenzen zum Bewegen der Tropfen in Richtung Bereichsmitte.

Die Verwirbelung der Partikel erfolgt vorzugsweise derart, dass die verwirbelten Partikel ein Wirbelbett bilden, wobei die Partikel dem Wirbelbett vorzugsweise über einen Wirbelbett-Eintrittsbereich auf der Fallstrecke zugeführt werden und darin zu einem Wirbelbett-Austrittsbereich bewegt werden, in dem sich die Bereichsaustrittsöffnung befindet. Vorzugsweise werden die Partikel am Ende der Fallstrecke zu dem Wirbelbett-Eintrittsbereich gelenkt. Diese Massnahmen gewährleisten, dass sämtliche Partikel in etwa die selbe Verweilzeit und insbesondere mindestens eine durch die Geometrie des Wirbelbetts bestimmt Mindestverweilzeit haben.

Bei den erfindungsgemässen Verfahren werden die Partikel in der Fallstrecke mit einer Flüssigkeit beaufschlagt. Die Flüssigkeit wird vorzugsweise zu Intensivierung der Kühlung der über die Fallstrecke fallenden Partikel verwendet. Gemäss der vorliegenden Erfindung erfolgt die Verwendung einer Flüssigkeit zur Beaufschlagung der Partikel, da auf diese Weise den heissen Partikeln durch das Verdampfen der Flüssigkeit sehr viel Wärme entzogen werden kann.

Die verfahrensmässige Lösung des Problems bei dem eingangs genannten Verfahren kann auch allein durch das Beaufschlagen der Partikel in der Fallstrecke mit einer Flüssigkeit erfolgen.

Zweckmässigerweise liegt die Verdampfungstemperatur der genannten Flüssigkeit unter der Schmelztemperatur der Partikel. Dadurch wird gewährleistet, dass den verfestigten Tropfen bzw. den Partikeln, durch die für den Phasenübergang der Flüssigkeit not-wendige Wärme, sehr viel Wärme entzogen wird.

Besonders vorteilhaft ist es, wenn als Flüssigkeit Wasser und/oder Ethylenglycol verwendet wird, wobei insbesondere die Flüssigkeitszufuhr so dosiert wird, dass die Partikel beim Erreichen des Aufnahmebereichs im wesentlichen nicht mehr benetzt sind.

Vorzugsweise wird die Flüssigkeit in Form feiner Tröpfchen zerstäubt, so dass die mittels der Vertropfungsdüse vertropften Tropfen in der Fallstrecke mit einem Sprühnebel beaufschlagt werden. Als besonders vorteilhaft hat sich erwiesen, wenn der Sprühnebel derart eingestellt wird, dass seine Tröpfchengrösse in etwa 1/3 bis 1/20 der Tropfengrösse der vertropften Schmelze entspricht.

Die Flüssigkeit kann auch in einem Trägergas zugeführt werden, das vorzugsweise mindestens eines der Gase Luft, Stickstoff, Kohlendioxid, Argon, Wasserdampf oder Ethylenglycol-Dampf aufweist.

Zweckmässigerweise werden bei dem erfindungsgemässen Verfahren die Tropfen nach Durchfallen zumindest eines Teils der Fallstrecke zumindest ankristallisiert. Dadurch wird die eingangs geschilderte Gefahr des Verklebens bzw. Anklebens der Tropfen weitgehend ausgeschaltet.

Vorzugsweise werden die Tropfen nur soweit abgekühlt, dass ihre Temperatur über der Glasübergangstemperatur T_{g} des Kunststoffs bleibt. Dadurch wird der Energiebedarf beim Wiedererhitzen (SSP) der Partikel gering gehalten.

Bei einer weiteren vorteilhaften Ausführung des erfindungsgemässen Verfahrens wird die thermische Energie der in der Fallstrecke vorliegenden Prozessgase wie Luft, Stickstoff, Kohlendioxid, Argon, Wasserdampf oder Ethylenglycol-Dampf zurück gewonnen.

Gemäss einer zweckmässigen Weiterbildung des erfindungsgemässen Verfahrens werden die kugelförmigen oder kugelähnlichen Partikel nach dem Verlassen des Aufnahmebereichs einer Kristallisationsstufe zugeführt. In ihr werden die in der Fallstrecke zumindest ankristallisierten Tropfen weiter kristallisiert bzw. durchkristallisiert.

Bei einer weiteren vorteilhaften Weiterbildung des erfindungsgemässen Verfahrens werden die kugelförmigen Partikel nach dem Durchlaufen der einen oder mehreren Kristallisationsstufen (Fallstrecke, Kristallisationsstufe) einer Nachkondensationsstufe zur Festphasen-Polykondensation zugeführt. So können kugelförmige Partikel gewonnen werden, die für die Weiterverarbeitung (Formgebung durch Spritzgiessen, Streckblasformen etc.) von Gebrauchsgegenständen aufgrund ihrer Materialeigenschaften und ihrer geometrischen Form besonders vorteilhaft sind.

Vorzugsweise wird der erfindungsgemässe Aufnahmebereich mit Gas wie Luft impulsartig beaufschlagt.

Für das erfindungsgemässe Verfahren ist es auch vorteilhaft, wenn der Aufnahmebereich trichterförmig ausgebildet ist und tropfenseitig derart verlaufende und von dem Gas durchsetzte Öffnungen aufweist, dass die Tropfen tangential entlang der Innenfläche des trichterförmigen Bereichs bewegt bzw. verwirbelt werden.

Die Beaufschlagung des Aufnahmebereichs kann z.B. mittels eines Gases mit einem sinusförmigen Druckverlauf erfolgen.

Als besonders vorteilhaft hat es sich erwiesen, wenn das Gas den Aufnahmebereich impulsartig mit einer Frequenz f mit vorzugsweise 1 Hz ≤ f ≤ 30 Hz, insbesondere 1 Hz ≤ f ≤ 10 Hz beaufschlagt.

Vorteilhaft ist dabei, wenn das Gas den Aufnahmebereich mit einer Maximalgeschwindigkeit v mit v ≤ 4 m/sec, insbesondere v ≤ 3 m/sec, vorzugsweise v ≤ 1 m/sec durchsetzt.

Weiterhin vorteilhaft ist es, wenn das Gas den Aufnahmebereich mit einem Druck p mit 0 mbar ≤ p ≤ 200 mbar, insbesondere 0 bar ≤ p ≤ 150 mbar über Atmosphärendruck beaufschlagt.

Insbesondere ist vorgesehen, dass in dem Aufnahmebereich Öffnungen mit einer Maschenweite d ≤ 80%, insbesondere d ≤ 30% der mittleren Partikeldurchmesser verwendet werden.

Bei einer anderen vorteilhaften Weiterbildung des erfindungsgemässen Verfahrens werden der Kristallisationseinrichtung ein Teil der zu Kugeln kristallisierten oder zumindest ankristallisierten Partikel entnommen und oberhalb des Aufnahmebereichs den die Fallstrecke durchfallenden Tropfen wieder zugeführt. Vorzugsweise werden etwa 10 bis 50 % der der Kristallisationseinrichtung entnommenen Kügelchen in den Aufnahmebereich zurückgeführt.

Der Schmelze kann unmittelbar vor dem Vertropfen ein die Nachkondensation beschleunigender Kettenverlängerer beigegeben werden, wobei der Anteil des Kettenverlängerers in der zu vertropfenden Schmelze < 0,5 Gew% beträgt.

Vorzugsweise wird der Kettenverlängerer der Schmelze in einer Menge zugegeben, dass seine Wirkung nach weniger als 10 min, insbesondere nach einer Zeit zwischen 1 min und 10 min einsetzt. Als Kettenverlängerer kommt z.B. ein Kettenverlängerer auf der Basis von Polyol, Dianhydrid einer Tetracarbonsäure, Pentaerythrit oder Oxazolinen in Frage.

Zweckmässigerweise werden die Tropfen zumindest einem Teil der Fallstrecke einem Gegenstrom oder einem Gleichstrom ausgesetzt, der vorzugsweise laminar ist, wobei der Gegenstrom mit einer Geschwindigkeit von weniger als 0,2 m/sec, vorzugsweise weniger als 0,1 m/sec abgezogen wird, und der Gleichstrom mit einer Geschwindigkeit von weniger als 1 m/sec, vorzugsweise weniger als 0,5 m/sec abgezogen wird.

Bei einer weiteren vorteilhaften Ausgestaltung der Erfindung durchströmt das den Aufnahmebereich durchsetzende Gas einen ersten Kreislauf, wobei ein Anteil des Gases einer Reinigungsstation zugeführt wird, in der das Gas gereinigt und gekühlt wird, um anschliessend dem Kreislauf erneut zugeführt zu werden. Die Führung des Gases in der Reinigungsstation erfolgt dabei vorzugsweise im Gegenstrom bzw. Gleichstrom zu einem Glycolkreisläuf.

Das den Aufnahmebereich bildende tuchartige Element gemäss einer ersten Ausführung des erfindungsgemässen Verfahrens bildet vorzugsweise einen Trichter, über den die Tropfen bzw. Partikel der Kristallisationseinrichtung und sodann der Nachkondensationsstufe zugeführt werden. Dass die Verwirbelung verursachende tuchartige Element übt die Funktion einer Vorkristallisationsstufe aus.

Das gemäss einer zweiten Ausführung den Aufnahmebereich bildende trichterförmig geformte eigensteife Element wie Blech ("Conidurblech"®) arbeitet mit besonders angeordneten Öffnungen. Dieses Blech besitzt besonders angeordnete Öffnungen mit spezieller Geometrie, welche mittels des durchströmenden Gases direkt hinter dem Durchtritt Turbulenzen erzeugen, die die Tropfen bzw. Partikel in Richtung Trichtermitte treiben. Ebenso wie bei dem tuchartigen Element verhindert der pulsierende Gasstrom das Kleben der Tropfen bzw. Partikel untereinander und das Kleben der Partikel an Einrichtungen bzw. Begrenzungen der Fallstrecke. Somit übt das trichterförmige eigensteife Element ebenfalls die Funktion einer Vorkristallisationsstufe aus.

Das gemäss einer dritten Ausführung den Aufnahmebereich bildende Wirbelbett ermöglicht es, die nach dem Durchlaufen der Fallstrecke aufgenommenen bzw. aufgefangenen Partikel in einem fluidisierten Zustand zu halten, in dem ein gegenseitiges Verkleben bzw. Ankleben der Partikel an Begrenzungen praktisch ausgeschlossen ist. Darüber hinaus ermöglicht der fluidisierte Zustand der Partikel im Wirbelbett einen grossen Spielraum bei der geometrischen Gestaltung des Aufnahmebereichs.

Durch die erfindungsgemässe Lehre ist es dem Grunde nach nicht mehr erforderlich; zum Ankristallisieren der Tropfen bzw. Partikel diese mit hohen Gasströmen zu beaufschlagen, sondern es reicht aus, dass die Partikel - z.B. über das tuchartige Element - verwirbelt werden, um umfangsseitig eine Aushärtung zu erreichen, die es ermöglicht, dass die anschliessende Kristallisation bzw. Nachkondensation erfolgt, ohne dass die Partikel aneinander kleben oder in einem Umfang verformt werden, dass die zu den Partikeln verfestigten Endtropfen die gewünschte Kugelform nicht aufweisen. Die erfindungsgemässe Lehre ermöglicht die Herstellung von Partikeln mit einem Durchmesser von 0,1 - 3 mm, insbesondere von 0,4 - 1.6 mm.

Insbesondere sieht die Erfindung vor, dass die Tropfen mittels des Wirbelbetts bzw. mittels des pulsierenden Tuchs bzw. mittels des trichterförmig ausgebildeten eigensteifen Elements wie Blechelements mit speziell angeordneten Öffnungen, an dessen dem Produkt zugewandter Seite das pulsierende Gas Turbulenzen und Strömungen erzeugt, derart verwirbelt werden, dass ein Verkleben der Tropfen untereinander und auf dem Tuch bzw. Element selbst verhindert wird.

Dadurch, dass die Tropfen von dem pulsierenden tuchartigen Element, bei dem es sich insbesondere um ein solches aus Durchbrechungen aufweisendem Polytetrafluoräthylen (Teflon) handelt, beim Auftreffen weggeschleudert werden, erfolgt einerseits ein Anhaften an dem tuchartigen Element nicht und andererseits ist ein Aneinanderhaften von Partikeln aufgrund der übertragenen Impulse überaus kurzzeitig, so dass ein Zusammenkleben unterbleibt.

Bei der Verwendung des trichterförmig geformten Blechs stellen die unmittelbar hinter den Öffnungen sich ausbildenden Turbulenzen sicher, dass weder ein Anhaften an dem Blech noch ein Zusammenkleben der Tropfen erfolgt.

Insbesondere ist vorgesehen, dass das tuchartige Element Durchbrechungen mit einer Maschenweite d mit d ≤ 0,2 mm, insbesondere d ≤ 0,1 mm aufweist.

Des Weiteren sollte das das tuchartige Element durchsetzende Gas in dessen Bereich eine Temperatur zwischen 80°C und 170°C aufweisen.

Entsprechende Dimensionierungen bzw. Parameter gelten auch für das trichterförmige Blech ("Conidurblech"®) bzw. das dieses durchströmende Gas.

Das Gas kann durch einen Kreislauf geführt werden, in dem ein Wärmetauscher angeordnet ist. Über diesen ist nur zu Beginn des Vertropfens eine Erwärmung des Gases wie Luft erforderlich. Die nachfolgende Temperatureinstellung erfolgt einerseits durch den Wärmeübergang von den Tropfen und andererseits dadurch, dass ein Teil des in einem Kreislauf geführten Gases abgeführt und einer Reinigungsstation, die einen Glykolkreislauf umfasst, zugeführt wird. Dabei erfolgt gleichzeitig eine Abkühlung des Gases, das sodann dem Kreislauf wieder zugeführt wird. Durch die Reinigung des Gases werden gleichzeitig Oligomere entfernt.

In weiterer hervorzuhebender Ausgestaltung der Erfindung ist vorgesehen, dass die dem tuchartigen Element bzw. trichterförmigen Blechelement bzw. dem Wirbelbett oder gleichwirkenden Element nachgeordnete Kristallisationseinrichtung derart ausgebildet wird, dass ein Teil der zu Kugeln kristallisierten bzw. ankristallisierten Tropfen entnommen und oberhalb des tuchartigen Elementes in die Fallstrecke zurückgeführt wird. Dabei sollte in etwa 10 - 50% der der Kristallisationseinrichtung entnommenen Kugeln zurückgeführt werden.

Von der Kristallisationseinrichtung werden die Kugeln über eine Schleuse der Nachpolykondensationsstufe zugeführt, wobei die Kugeln in der Schleuse auf einen Umgebungsdruck p mit p ≤ 2 mbar, insbesondere p ≤ 0,5 mbar eingestellt werden. Die Schleuse selbst ist ein- und auslassseitig von einem Absperrelement verschliessbar, das beispielsweise als Irisblende oder anderes geeignetes Absperrelement ausgebildet wird, um ein Zerstören der Kugeln zu unterbinden. Eine entsprechende Schleuse sollte grundsätzlich der Nachpolykondensationsstufe nachgeordnet werden, um die Kugeln auf Atmosphärendruck einzustellen, ohne dass ebenfalls die Gefahr besteht, dass in die Nachpolykondensationsstufe Sauerstoff eindringt. Statt dieser "Vakuum-SSP" kann sich auch eine Nachkondensation unter Inertgasfluss anschliessen. Sowohl die kontinuierliche als auch die chargenweise Verfahrensweise sind möglich.

In der Nachpolykondensationsstufe selbst werden die Kugeln einer unter Vakuum betriebenen Nachkondensationsstufe vorzugsweise in Form einer langsam drehenden Welle zugeführt, wobei aufgrund einer eigenerfinderischen Weiterbildung die Verweilzeit weniger als 15 Stunden, insbesondere im Bereich zwischen 8 und 12 Stunden dadurch erzielt werden können, dass der Schmelze kurz vor deren Vertropfung ein Kettenverlängerer oder Chain-Extender beigegeben wird, der von der Kunsfstoffextrusion bekannt ist. Allerdings wird der Kettenverlängerer, über den Hydroxyl-Gruppen im Polymer verbunden werden und das Molekulargewicht sehr schnell ansteigt, erst kurz vor Vertropfen der Schmelze zugegeben, so dass die Viskosität der Schmelze die Tropfenbildung nicht negativ beeinflusst. Gleichzeitig sind die Fallstrecke und die Verweilzeit in der Kristallisationsstufe derart aufeinander abgestimmt, dass sich die Wirkung des Kettenverlängerers im wesentlichen in der Nachpolykondensationsstufe entfalten kann. Daher sollte der Kettenverlängerer derart gewählt und in einem Umfang der Schmelze zugefügt werden, dass der Kettenverlängerer in der Zeitspanne von 1 - 10 Minuten nach der Zugabe wirksam wird. Chemische Familien für entsprechende Kettenverlängerer sind Pentaerythrit oder Polyole. Als bevorzugte Kettenverlängerer sind Oxazoline wie Sojaoxazoline, Rizinusoxazoline oder Bisoxazoline zu nennen. Insoweit wird auch auf die Veröffentlichung Kunststoffe 83 (1993, 8, S. 885 - 888) sowie Firmendruckschrift "Henkel, Plastics and Coatings Technology, PM Europe/Overseas, Mai 1994, Oxazolines for the reactive extrusion", verwiesen.

Insbesondere sollte der Anteil des Kettenverlängerers in der Schmelze weniger als 0,5 Gew%, vorzugsweise weniger als 0,2 Gew% betragen. Des Weiteren sollte die Schmelze derart eingestellt werden, dass beim Vertropfen deren intrinsische Viskosität (i.V.) i.V. ≤ 0,4 dl/g, insbesondere 0,1 dl/g ≤ i.V. ≤ 0,35 dl/g, beträgt.

Durch das Versprühen von Flüssigkeit wie insbesondere Wasser in der Fallstrecke ergibt sich der Vorteil, dass ein gewünschtes Abkühlen der vertropften Schmelze möglich ist, ohne dass ein zu grosser Volumenstrom erforderlich ist, der andernfalls ein Verwirbeln der Tropfen und damit ein Verkleben dieser untereinander oder ein Anhaften an den Wänden bewirken könnte.

Dabei sollte der Sprühnebel wie Wassersprühnebel so dosiert werden, dass die Gas- bzw. Tröpfchentemperatur, die im Abstand wie einigen Metern unterhalb des Sprühnebels gemessen wird, in etwa die optimale Kristallisationstemperatur einstellt.

Flüssiges Medium wie zum Beispiel Wasser hat eine Verdampfungsenthalpie von in etwa 2.400 KJ/Kg und eine Erhöhung der Temperatur des Dampfes von etwa 100 °C auf 200 °C benötigt zusätzlich 200 KJ/Kg. Um somit 1 t PET von 280 °C auf 160 °C abzukühlen, wird eine Wassermenge von nur 80 Kg Wasser/t PET benötigt. Entsprechende Flüssigkeit wird erfindungsgemäss als sehr kleine Sprühwassertröpfchen, die ringförmig um den in der Fallstrecke herabfallenden Tropfen eingesprüht werden, in unmittelbarer Nähe dieser gebracht. Es erfolgt somit ein unmittelbares Verdampfen der Wassertröpfchen, so dass infolge dessen grössere Wärmemengen aus den Tropfen abgeführt werden kann.

Insbesondere besteht die Möglichkeit, die Tropfen mit relativ geringer Geschwindigkeit anzuströmen, so dass einerseits eine laminare Strömung ausgebildet werden kann und andererseits die Sinkbewegung der Tröpfchen nicht behindert wird. Zusätzlich zeigt der beim Verdampfen entstehende Wasserdampf den Vorteil einer Inertisierung der Tropfen, so dass insbesondere unerwünschte Ablagerungen im Bereich der Vertropfungsdüse ausgeschlossen ist.

Die Durchführung des erfindungsgemässen Verfahrens erfolgt durch eine Anordnung zur Herstellung von kugelförmigen Partikeln aus Kunststoff der eingangs genannten Art, die sich insbesondere dadurch auszeichnet, dass die Fallstrecke in einen Aufnahmebereich übergeht, in dem zumindest ein Teil der Partikel derart verwirbelbar ist, dass Turbulenzen zum Bewegen der Partikel in Richtung Bereichsmitte entstehen.

Die Anordnung zur Herstellung von kugelförmigen Partikeln aus Kunststoff der eingangs genannten Art zeichnet sich insbesondere auch dadurch aus, dass dem Fallturm eine Vorrichtung zum Beaufschlagen der Partikel mit einer Flüssigkeit zugeordnet ist. Vorzugsweise ist der unterhalb der Fallstrecke bzw. im unteren Bereich des Fallturms angeordnete Aufnahmebereich trichterförmig ausgebildet.

Vorzugsweise ist zumindest ein Teil des Aufnahmebereichs durch Vibrationsmittel vibrierbar.

Vorzugsweise ist der Aufnahmebereich durch eine Vielzahl von Begasungslöchern begasbar.

Bei einer speziellen Ausführung der Anordnung geht die Fallstrecke in eine trichterförmige Aufnahme über, die umfangsseitig von einem pulsierenden tuchartigen Element und/oder Öffnungen aufweisenden eigensteifen Element begrenzt ist.

Vorzugsweise ist der Aufnahmebereich so strukturiert, dass er einen definierten Eintrittsbereich und einen definierten Austrittsbereich aufweist. Am Ende der Fallstrecke bzw. am unteren Ende des Fallturms können Ablenkmittel vorgesehen sein, mit denen die Partikel zu dem Eintrittsbereich gelenkt werden können. Alternativ können die Schmelze-Austrittsöffnungen der Düseneinrichtung in einem Bereich der Düseneinrichtung angeordnet sein, der sich vertikal oberhalb des Eintrittsbereichs befindet und der im wesentlichen den selben Grundriss wie der Eintrittsbereich hat. Besonders vorteilhaft ist es in diesem Zusammenhang, wenn zumindest ein Teil der Schmelze-Austrittsöffnungen der Düseneinrichtung abgewinkelt zur Vertikalen angeordnet sind. Durch diese Massnahmen wird gewährleistet, dass die Partikel dem Aufnahmebereich in einem definierten Eintrittsbereich zugeführt werden.

Bei einer besonders vorteilhaften Ausführung der Anordnung sind in dem Fallturm Zerstäubungsmittel angeordnet, mit denen eine zerstäubte Flüssigkeit in die Fallstrecke einbringbar ist.

Es können ausserdem Mittel zum Rückgewinnen thermischer Energie vorhanden sein, mit denen die in den im Fallturm vorliegenden Prozessgasen enthaltene Prozesswärme rückgewinnbar ist.

Bei einer weiterführenden Ausgestaltung der Anordnung schliesst sich an den Aufnahmebereich eine Kristallisationsstufe an.

Zusätzlich kann der einen oder den mehreren Kristallisationsstufen eine Nachkondensationsstufe zur Festphasen-Polykondensation (SSP) nachgeschaltet sein, für die eine Vakuum-SSP oder eine SSP unter Inertgas ausgelegt ist.

Vorzugsweise ist der Aufnahmebereich von pulsierendem Gas wie Luft beaufschlagbar. Dadurch lässt sich eine besonders wirkungsvolle Verwirbelung bzw. Fluidisierung der in den Aufnahmebereich gelangenden Partikel erzielen.

Der erfindungsgemässe Aufnahmebereich kann ein tuchartiges Element sein, das an einem Trichter wie Metall- bzw. Edelstahltrichter befestigt ist und zu dessen Innenfläche derart beabstandbar ist, dass in den zwischen dem tuchartigen Element und dem Trichter vorhandenen Zwischenraum eine Leitung mündet, in der ein die Leitung freigebendes bzw. sperrendes Sperrelement angeordnet ist. An Stelle des tuchartigen Elements kann der Aufnahmebereich aber auch ein eigensteifes Element sein, das von einem Trichterelement derart beabstandet umgeben ist, dass in den zwischen dem eigensteifen Element und dem Trichterelement vorhandenen Zwischenraum, ähnlich wie im vorgehenden Absatz beschrieben, eine Leitung mündet, in der ein die Leitung freigebendes bzw. sperrendes Sperrelement angeordnet ist.

Anstelle eines tuchartigen Elements oder eines eigensteifen Elements kann der Aufnahmebereich auch eine Wirbelbettkammer sein, die vorzugsweise durch eine Vielzahl von Begasungslöchern mit einer Gaseintrittskammer verbunden ist, in die eine Leitung mündet, in der ein die Leitung freigebendes bzw. sperrendes Sperrelement angeordnet ist.

Die Anordnung ist vorzugsweise so ausgelegt, dass das Gas pulsierend mit einer Frequenz f dem Zwischenraum zuführbar ist, wobei die Frequenz f insbesondere 1 Hz ≤ f ≤ 30 Hz, vorzugsweise 1 Hz ≤ f ≤ 10 Hz beträgt.

Besonders zweckmässig ist es, wenn die Öffnungen des Aufnahmebereichs derart ausgebildet sind, dass das diese durchsetzende Gas entlang der Innenfläche des Aufnahmebereichs insbesondere turbulent strömt.

Vorteilhaft ist es auch, wenn die Öffnungen derart ausgebildet sind, dass das diese durchsetzende Gas tangential zur Innenfläche des eigensteifen Elements strömt.

Vorzugsweise ist das Gas mit einem sinusförmigen Druckverlauf dem Zwischenraum der Anordnung zuführbar.

Besonders zweckmässig ist es, wenn der Aufnahmebereich antihaftend ist und insbesondere aus Polytetrafluorethylen besteht.

Vorzugsweise hat der Aufnahmebereich Öffnungen mit einer Maschenweite d mit vorzugsweise d ≤ 0,6 mm, insbesondere d ≤ 0,3 mm. Diese Abstimmung der Maschenweite eignet sich besonders gut für Partikel mit einem Kugeldurchmesser von etwa 0,8 bis 1,2 mm.

Eine besonders vorteilhafte Ausgestaltung der Anordnung weist einen ersten Kreislauf auf, durch den das den Aufnahmebereich durchsetzende Gas strömt, und von dem ein entlang der Fallstrecke verlaufender Zweig in einem Abstand A aus der Fallstrecke weggeführt ist, wobei oberhalb des Abstands A ein Sprühnebel abgebendes, die Fallstrecke umgebendes und mit Sprühdüsen ausgestattetes Ringelement angeordnet ist. Das Ringelement ermöglicht eine gleichmässige Besprühung der die Fallstrecke durchlaufenden Partikel mit einem Kühlfluid, das die Partikel benetzt und durch seine Verdampfung die Partikel kühlt.

Vorzugsweise ist das die Sprühdüsen aufweisende Ringelement in einem zweiten Kreislauf angeordnet, der seinerseits unterhalb der die Schmelze vertropfenden Düseneinrichtung aus der Fallstrecke weggeführt ist.

Vorzugsweise ist ein Teil des in den ersten Kreislauf geführten Gases einer Reinigungsstation mit einem Glycolkreislauf zuführbar. Das in dem Reinigungskreis geführte und erwärmte Glycol selbst kann somit zur Veresterung verwendet werden.

Zweckmässigerweise weist die Kristallisationseinrichtung eine Eintrittsöffnung auf, die zugleich die Austrittsöffnung des trichterförmigen Aufnahmebereichs ist.

Weiterhin vorteilhaft ist es, wenn die Kristallisationseinrichtung in einem weiteren Kreislauf angeordnet ist, durch den ein Teil der in der Kristallisationseinrichtung kristallisierten Kugeln oberhalb des Trichters bzw. des eigensteifen Elements der Fallstrecke zurückführbar ist.

Vorzugsweise ist der ggf. vorhandenen Nachkondensationsstufe eine Schleuse vor- und/oder nachgeordnet, die eingangs- und/oder ausgangsseitig von einem vorzugsweise als Irisblende ausgebildeten Absperrelement verschliessbar ist.

Zweckmässig ist es, wenn bei der Anordnung die insbesondere als eine in Schwingung versetzbare Düsenplatte ausgebildete Düseneinrichtung mit einer die Schmelze zuführenden Leitung verbunden ist, in der unmittelbar vor dem Düsenelement oder in dem Düsenelement selbst eine weitere Leitung mündet, die mit einem Behältnis für einen Kunststoff-Kettenverlängerer verbunden ist.

Das tuchartige Element oder das eigensteife Element wie das Metallblech selbst kann an einem Trichter wie Metall- bzw. Edelstahltrichter befestigt sein und sich entlang dessen Innenfläche erstrecken, wobei zwischen dem tuchartigen Element oder dem eigensteifen Element wie Metallblech und dem Trichter eine Leitung mündet, über die das Gas wie Luft zuführbar ist. In der Leitung selbst ist ein die Leitung freigebendes bzw. sperrendes Sperrelement wie rotierende Klappe vorgesehen, über das Gas pulsierend mit einer gewünschten Frequenz v dem Zwischenraum zuführbar ist, wobei die Frequenz f insbesondere 1 Hz ≤ f ≤ 30 Hz, vorzugsweise 1 Hz ≤ f 5 10 Hz beträgt. Unabhängig hiervon sollte der Druckverlauf im Gas sinusförmig sein.

Bei dem tuchartigen Element handelt es sich insbesondere um ein solches aus Polytetrafluoräthylen (Teflon), das Durchbrechungen mit einer Maschenweite d mit vorzugsweise d ≤ 0,2 mm, insbesondere d ≤ 0,1 mm aufweist.

Bei dem trichterförmigen eigensteifen Element wie dem Metallblech bzw. bei der Wirbelbettkammer handelt es sich um ein Element, welches ähnliche Maschenweiten wie das tuchartige Element besitzt. Jedoch sind die Durchbrechungen bzw. Löcher derartig angeordnet, dass das pulsierende Gas turbulent ist und sich vorzugsweise tangential entlang der Innenfläche und in Richtung der vorzugsweise trichterförmigen Mündung bewegt.

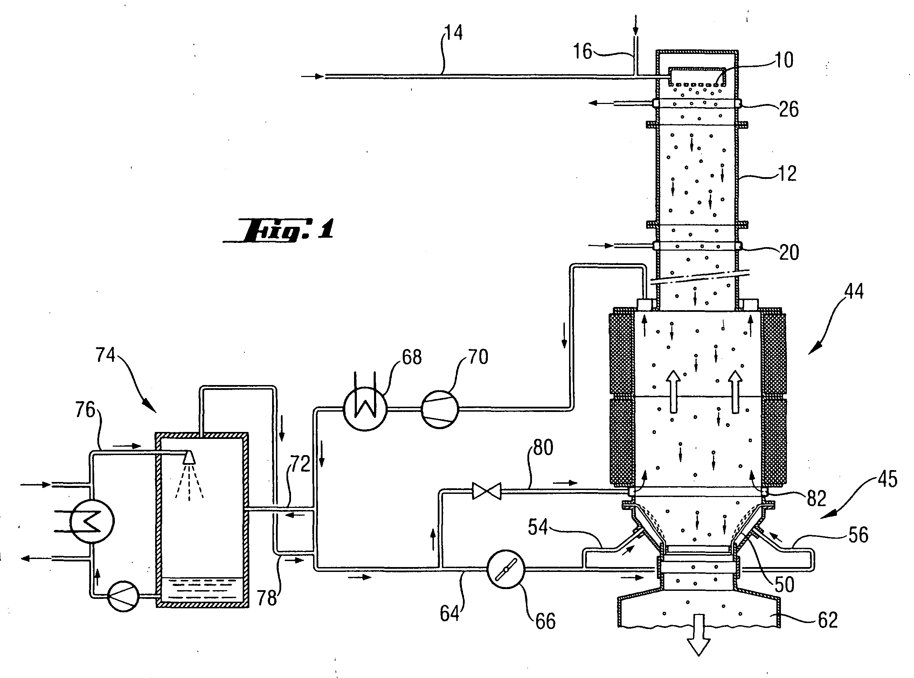

Das die Wirbelbettkammer bzw. das tuchartige Element bzw. das eigensteife Element durchsetzende Gas strömt in einem ersten Kreislauf, von der ein entlang der Fallstrecke verlaufender Zweig in einem Abstand A (siehe Fig. 1) aus der Fallstrecke weggeführt wird.

Oberhalb des Abstandes A ist ein Sprühnebel abgebendes die Fallstrecke umgebendes Düsen aufweisendes Ringelement angeordnet. Hierdurch ist eine Feinverteilung von Flüssigkeitströpfchen in Richtung der herabfallenden Tropfen gewährleistet, um im erforderlichen Umfang Wärme zu entziehen. Der Sprühnebel selbst wird im Abschnitt eines zweiten Kreislaufes geführt, der seinerseits unterhalb der die Schmelze vertropfenden Vertropfungsdüse aus der Fallstrecke weggeführt wird.

Ein Teil des in dem ersten Kreislauf geführten Gases wird einer Reinigungsstation mit Glykolkreislauf zugeführt, um einerseits das Gas zu reinigen und andererseits abzukühlen. Hierdurch wird die Temperatur in dem Kreislauf derart eingestellt, dass im Aufnahmebereich bzw. dem Trichter das Gas eine Temperatur zwischen 80°C und 170°C aufweist.

Die Kristallisationseinrichtung weist eine Eintrittsöffnung auf, die der Querschnittsöffnung des Trichters entspricht. Ferner ist die Kristallisationseinrichtung in einem dritten Kreislauf angeordnet, durch den ein Teil der in der Kristallisationseinrichtung kristallisierten Kugeln oberhalb des Trichters in die Fallstrecke zurückführbar ist. Durch diese Massnahmen ist sichergestellt, dass die der Nachpolykondensation zugeführten Tropfen in einem Umfang kristallisiert sind, dass ein Verkleben ausgeschlossen ist.

Die Nachpoly- oder Nachkondensationseinrichtung weist eine vor- und/oder nachgeordnete Schleuse auf, die eingangs- und/oder ausgangsseitig von einem vorzugsweise als Irisblende oder Zellrandschleuse ausgebildetem oder anderem gleichwirkenden bzw. adäquatem Sperrelement verschliessbar ist.

Durch diese Anordnung der Schleusen ist zum einen gewährleistet, dass in die Nachkondensationseinrichtung Sauerstoff nicht eindringen kann. Durch die Verwendung der als Irisblende ausgebildeten Absperrelemente bzw. gleichwirkende Elemente ist ein Zerstören der zuzuführenden bzw. abzuführenden Kugeln ausgeschlossen.

Ein selbständiger Lösungsvorschlag der Erfindung sieht vor, dass die insbesondere als ein in Schwingung versetzbare Düsenplatte ausgebildete Düseneinrichtung mit einer die Schmelze zuführenden Leitung verbunden ist, in der unmittelbar vor der Düse oder in der Düse selbst eine weitere Leitung mündet, die mit einem Behältnis für einen Kunststoff-Kettenverlängerer verbunden ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung eines Ausschnitts einer Anordnung zum Herstellen von kugelförmigen Partikeln aus einem Polymer bzw. Prepolymer,

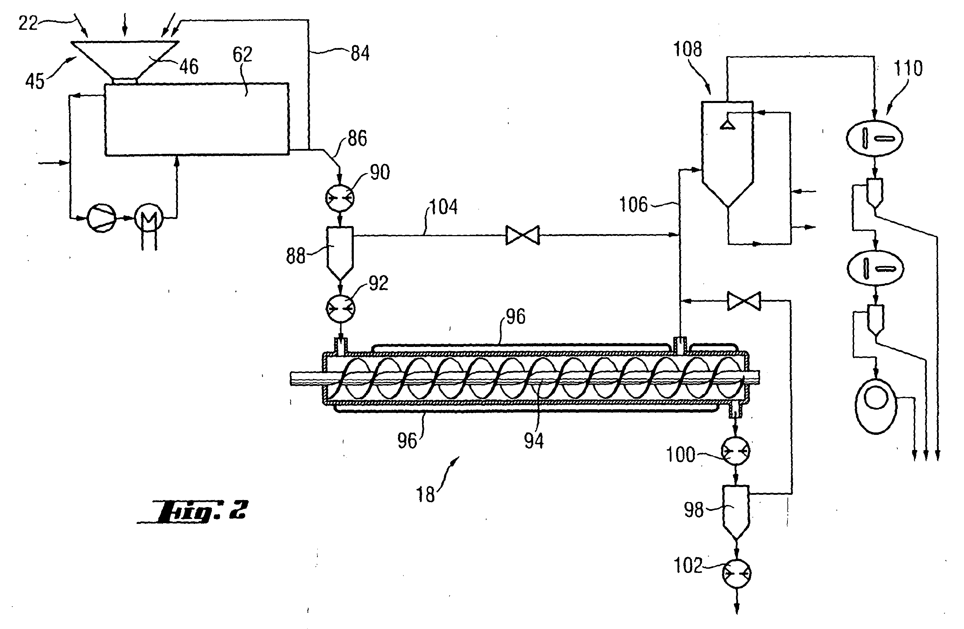

- Fig. 2: eine Prinzipdarstellung eines weiteren Ausschnitts einer Anordnung zum Kristallisieren und Nachpolykondensieren kugelförmiger Partikel,

- Fig. 3: eine erste Ausführungsform eines Fallturms der Anordnung gemäss Fig. 1 in Prinzipdarstellung,
- Fig. 4: eine zweite Ausführungsform eines Fallturms der Anordnung nach Fig. 1 in Prinzipdarstellung, und
- Fig. 5: eine Prinzipdarstellung eines Trichters.

Um kugelförmige Partikel aus einem Polymer bzw. Prepolymer, insbesondere aus polyfunktionellen Carbonsäuren und Alkoholen, insbesondere zur Herstellung zur kugelförmigen PET (Polyethylenterephthalat)-Pellets herzustellen, wird von einer nicht dargestellten Pastenaufbereitungsstufe, einer Veresterungsstufe für Terephthalsäure und Ethylenglykol und einer sich anschliessenden unterdruckbeaufschlagten Prepolykondensationsstufe ein Polyester-Vorkondensat mit einer Produkttemperatur von in etwa 260 °C bis 280 °C und einer intrinsische Viskosität IV von 0,10 bis 0,35 dl/g über einen Wärmetauscher und einen Filter einer Düsenplatte 10 zugeführt, über die das gut filtrierte Vorkondensat vertropft wird. Sollen PBT-Pellets hergestellt werden, weist das Polyester-Kondensat eine Produkttemperatur zwischen 220 °C und 260 °C und eine intrinsische Viskosität zwischen 0,1 und 0,5 dl/g auf.

Die Düsenplatte 10 ist in Vibrationsschwingung versetzbar und weist insbesondere auf konzentrischen Kreisen angeordnete Austrittsöffnungen auf. Insoweit wird jedoch auf bekannte Einrichtungen verwiesen. Der Schwingungserreger, bei dem es sich um einen elektromagnetischen Schwingungserreger handeln kann, geht von einer Tragkonstruktion aus, um die Düsenplatte in Schwingungen zu versetzen. Frequenzen, mit denen die Düsenplatte 10 in Schwingungen versetzt wird, können im Bereich zwischen 200 Hz und 2000 Hz liegen. Die Durchmesser der Öffnungen der Düsenplatte 10 sollten im Bereich zwischen 0,2 mm und 0,8 mm liegen. Ferner sollte das Polyester-Vorkondensat mit einem Überdruck von z. B. 0,2 bar bis 1 bar der Düsenplatte 10 zugeführt werden. Auch ist die Düsenplatte 10 gleichmässig beheizt, wobei insbesondere eine Temperatur im Bereich zwischen 250 °C und 290 °C bei der Herstellung von PET-Pellets und zwischen 220 °C und 270° C bei der Herstellung von PBT-Pellets zu wählen ist.

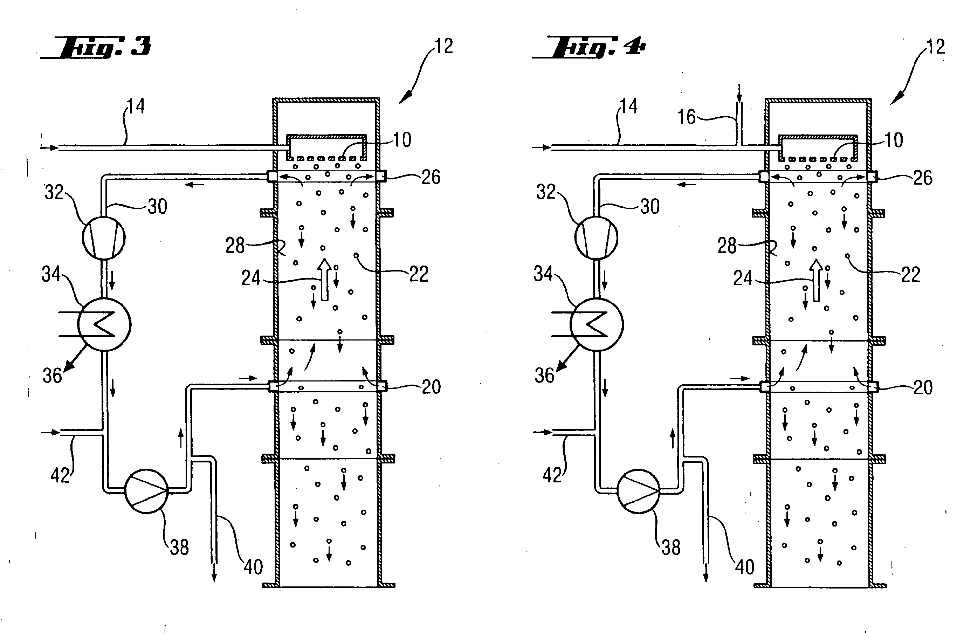

Im Ausführungsbeispiel ist die Düsenplatte 10 im Kopfbereich eines Fallturms 12 angeordnet, innerhalb der die mittels der Düsenplatte 10 vertropften aufgeschmolzenen Prepolymeren regelmässig in gleich grosse und gleichförmige Partikel vertropft werden. Dabei kann die Länge des Fallturms im Bereich von z. B. 10 bis 15 m oder gegebenenfalls auch darunter liegen. Der Fallturm 12 ist vergrössert den Fig. 3 und 4 zu entnehmen. Dabei ist der Aufbau des Fallturms gleich. Die Ausführungsformen der Fig. 3 und 4 unterscheiden sich dahingehend, als dass in der das Prekondensat der Düsenplatte 10 zuführenden Leitung 14 in Fig. 4 eine weitere Leitung 16 mündet, über die ein Kettenverlängerer (Chain-Extender) dem aufgeschmolzenen Prepolymer in einer Menge zugeführt wird, die in etwa 0,5 Gew% oder weniger beträgt. Mittels des Kettenverlängerers werden Hydroxyl-Gruppen des Prepolymers verbunden bei gleichzeitigem sprunghaftem Anstieg des Molekulargewichtes. Entsprechende Kettenverlängerer gehören z. B. zu den chemischen Familien wie Polyol oder Pentaerythrit. Insbesondere sind Oxazoline zu nennen.

Die entsprechenden über die Leitung 16 zugeführten Kettenverlängerer werden in einem Ort der aufgeschmolzenen Prepolymer zugeführt, dass sich die intrinsische Viskosität beim Vertropfen nicht verändert, wodurch anderenfalls Nachteile bei dem Vertropfen selbst entstehen könnten. Gleichzeitig ist der Kettenverlängerung so gewählt bzw. in einer solchen Menge zugegeben, dass seine Wirkung dem Grunde nach erst in einer nachstehend zu erläuternden Nachkondensationsstufe oder Nachpolykondensationsstufe 18 entfaltet wird.

Der Fallturm 12 weist im Abstand zu der Düsenplatte 10 oder ein gleichwirkendes Element eine ringförmige Düsenanordnung 20 auf, die eine Vielzahl von Düsen umfasst, um in dem Fallturm 12 Flüssigkeitspartikel zu versprühen, wobei es sich insbesondere um Wasser handelt. Dabei soll die Flüssigkeit in einem Umfang versprüht werden, dass die Sprühpartikel Durchmesser aufweisen, die 1/3 bis 1/20 der Polymertropfen 22 entspricht.

Letztere belaufen sich vorzugsweise auf 0,8 mm, wohingegen die Flüssigkeitstropfen maximal 0,2 mm betragen sollten.

Der Sprühnebel selbst wird im Gegenstrom (Pfeil 24) zur Fallrichtung der Tropfen 22 eingesprüht, wobei im Kopfbereich des Fallturms 12 unmittelbar unterhalb der Düsenplatte 10 über eine ringförmig angeordnete Gasabsaugungsvorrichtung 26 der durch das Wechselwirken mit den Partikeln 22 entstehende Wasserdampf vorzugsweise mit einer Geschwindigkeit ≤ 0,2 m/sec, insbesondere in etwa 0,1 m/sec abgezogen wird. Durch die geringe Geschwindigkeit des den Tropfen 22 entgegenströmenden Sprühnebels bzw. Wasserdampfs werden Turbulenzen ausgeschlossen, so dass ein Verwirbeln der Tropfen 22 ausgeschlossen und somit ein Zusammenbacken dieser oder Anhaften an der Innenwandung 28 des Fallturms 12 ausgeschlossen ist.

Zum Erzeugen des Sprühnebels ist ein Kreislauf 30 vorgesehen, der ein Gebläse 32 sowie einen Dampfkondensator 34 umfasst. Aus diesem werden nicht kondensierbare Gase über einen Anschluss 36 abgeführt.

Der Dampfkondensator 36 hat die Aufgabe, den in dem Kreislauf 30 geführten Dampf zu verflüssigen. Anschliessend wird die Flüssigkeit mittels einer Pumpe 38 der Ringanordnung 20 zugeführt. Da sich die Temperatur auf hohem Niveau befindet, kann die Wärme aus dem Dampfkondensator 34 für Erwärmung anderer Anlagenteile benutzt werden. Um auszuschliessen, dass ein unerwünschtes Anreichern mit Oligomeren erfolgt, wird ein Teil des Wasser kontinuierlich ausgetauscht, d. h. ein Anteil wird über eine Leitung 40 abgeführt und dieser durch einen neuen Anteil über eine Leitung 42 ersetzt. Dieses heisse mit etwas Oligomeren und Glykol angereicherte Austauschwasser kann zur Wärmerückgewinnung dienen oder Wärmeträgerofen zugeführt werden. Auch eine osmotische Trennung von Wasser, Oligomeren und Glykol ist möglich. Insoweit wird jedoch auf hinlänglich bekannte Techniken verwiesen.

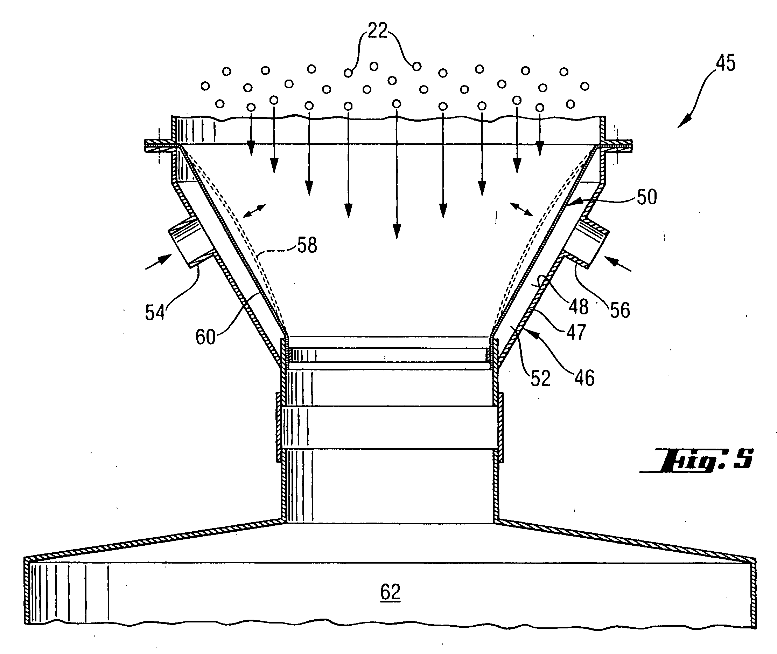

Ein unterer Abschnitt 44 des Fallturms 12 vorzugsweise grösseren Querschnitts mündet in einer einen Trichter 46 umfassenden Kristallisationsstufe 45, die rein prinzipiell in vergrösserter Darstellung der Fig. 5 zu entnehmen ist.

Der Trichter 46 der Kristallisationsstufe bzw. Vorkristallisationsstufe 45 umfasst einen trichterförmigen Basiskörper 47 der aus Metall wie Edelstahl bestehen kann.

Entlang Innenwandung 48 des trichterförmigen Basiskörpers 47 erstreckt sich ein insbesondere aus Polytetrafluoräthylen bestehendes tuchartiges Element 50 mit Durchbrechungen, die eine Maschenweite d mit d ≤ 0,2 mm, insbesondere d ≤ 0,1 mm aufweisen. Der zwischen dem Basiskörper 47 und dem tuchartigen Element 50 vorhandene Zwischenraum 52 wird über Anschlüsse 54, 56 mit einem Gas, insbesondere Luft, beaufschlagt, um das tuchartige Element 50, das nachstehend einfach als Tuch bezeichnet wird, pulsartig zu dehnen, so dass dieses sich ins Innere des Basiskörpers 47 bewegt (kleinpunktierte Linie) oder quasi äquidistant zur Innenfläche 48 des Basiskörpers 47 verläuft. Die erste "gedehnte" Position des Tuches 50 ist mit dem Bezugszeichen 58 und die Grundposition mit dem Bezugszeichen 60 versehen.

Durch das Pulsieren des Tuches 50 werden auftreffende Tropfen zurückgeschleudert mit der Folge, dass einerseits ein Anhaften unterbleibt und andererseits aufgrund des übertragenen Impulses bei einem Zusammentreffen mit einem anderen Tropfen ein Zusammenkleben vermieden wird. Gleichzeitig kann nur eine Deformation auftreten, die vernachlässigbar ist. Durch dieses Verwirbeln in der Kristallisationsstufe 45 erfolgt ein Ankristallisieren der Tropfen in einem Umfang, dass eine Abgabe an eine Kristallisationsstufe 62 erfolgen kann, ohne dass die Tropfen zusammenkleben.

Das der Kristallisationsstufe 45 zugeführte Gas vorzugsweise in Form von Luft wird in einem Kreislauf 64 geführt, in dem eine drehbare Klappe 66 angeordnet ist, über die der Kreislauf geöffnet bzw. geschlossen wird, um so das Gas impulsartig dem Zwischenraum 52 zwischen dem Basiskörper 47 und dem Tuch 50 zuzuführen. Dabei sollte das Absperrelement 66 derart eingestellt werden, dass sich eine Pulsfrequenz zwischen 1 und 20 Hz ergibt. Der maximale Druck des Gases sollte 200 mbar, vorzugsweise maximal 150 mbar über Atmosphärendruck liegen. Das Gas selbst sollte mit einer Geschwindigkeit von maximal 1 - 4 m/sec. das Tuch 50 durchsetzen, vorzugsweise mit einer Geschwindigkeit zwischen 1 und 3 m/sec. Des Weiteren sollte das Gas beim Durchsetzen des Tuches 50 eine Temperatur zwischen 80 ° und 170 °C aufweisen.

Um zu Beginn des Kristallisierens das Gas auf die gewünschte Temperatur einzustellen, befindet sich in dem Kreislauf 64 ein Wärmetauscher 68, dem ein Gebläse 70 vorgeschaltet ist, mittels welchem Gasmengen zwischen 1.000 m³/h und 5.000 m³/h gefördert werden. Diese Gasmengen hängen jedoch von den Produkt-Durchsatzleistungen des jeweiligen Systems ab. Durch das Durchsetzen der Kristallisationsstufe 45 und des unteren Abschnitts 44 des Fallturms 12 erfolgt ein Erwärmen des Gases. Ein Abkühlen auf die gewünschte Temperatur erfolgt auch dadurch, dass über eine Leitung 72 ein Teil des Gases abgeführt und einer Reinigungsstufe 74 zugeführt wird, die einen Glykolkreislauf 76 umfasst. Hierdurch werden in dem Gas vorhandene Oligomere entfernt. Gleichzeitig erfolgt eine Abkühlung des Gases mit der Folge, dass über die Leitung 78 in den Kreislauf 64 zurückgeführtes Gas die gewünschte Temperatur des das Tuch 50 durchsetzenden Gasstroms eingestellt werden kann. Von dem Kreislauf 64 wird des Weiteren eine Leitung 80 abgezweigt, die mit einer Gasverteilungsvorrichtung 82 verbunden ist, die am unteren Rand des unteren Abschnitts 44 des Fallturms 12 angeordnet ist. Der Abstand zum oberen Rand des Abschnittes 44 ist mit A bezeichnet. Oberhalb des Abstands A befindet sich die Ringdüse 20 für den Sprühnebel.

Aus der Prinzipdarstellung gemäss Fig. 1 und einem Vergleich mit den Fig. 3 und 4 ergibt sich besonders deutlich, dass der die Kristallisationsstufe 45 einschliessende Luftkreislauf 64 unterhalb des Sprühnebelkreislaufs 30 verläuft.

In der Fig. 1 ist der Fallturm 12 dargestellt, in dem der Fallrichtung der Tropfen 22 entgegengerichtet ein Sprühnebel abgegeben wird, dessen Tropfen sehr viel kleiner als 0,1 mm im Durchmesser sind. Dieser Sprühnebel wird zwischen die von der Düse 10 vertropften Partikel gesprüht, wobei im Kontakt mit den Tropfen 22 ein Verdampfen der Sprühnebeltropfen erfolgt. Gleichzeitig erfolgt ein Abkühlen der Polymertropfen 22.

Dabei wird der versprühte Nebel bezüglich Temperatur und Massenstrom derart eingestellt, dass die Tropfen bei einer Umgebungstemperatur von in etwa 170 °C in Richtung der Kristallisationsstufe 45 fallen, wodurch eine optimale Kristallisationstemperatur eingestellt wird. Diese Temperatur wird unterhalb der Ringdüse z.B. im Abstand von 100cm bis 1000cm gemessen, um eine Regelung durchzuführen.

Des Weiteren ist auf Folgendes hinzuweisen. Zwar wurde zuvor die erfindungsgemässe Lehre an Hand eines in Schwingung versetzten Tuches zur Ausbildung der Vorkristallisationsstufe 45 erläutert. Hierdurch erfolgt jedoch eine Beschränkung der Erfindung nicht. So kann die Vorkristallisationsstufe auch eine Wirbelbettkammer oder ein trichterförmig ausgebildetes eigensteifes Element wie insbesondere Blechelement umfassen, das Durchtrittsöffnungen aufweist, um innerhalb des so gebildeten Trichters bzw. unmittelbar über diesem eine Verwirbelung der Tropfen 22 in einem Umfang zu erzielen, dass ein Verkleben dieser untereinander oder an Wandungen unterbleibt. Dabei sind die Öffnungen in der Wirbelbettkammer bzw. in dem eigensteifen Element derart ausgebildet, dass sich eine tangentiale Gasstromkomponente ausbildet, also Gas entlang Innenfläche des z.B. trichterförmigen Abschnittes strömt, wobei gleichzeitig eine hinreichende Turbulenz erfolgt, um die Tropfen in Richtung Mitte des Trichters bzw. in Richtung dessen Austrittsöffnung Zwangszuführen. Bei dem trichterförmigen eigensteifen Element handelt es sich insbesondere um ein solches, wie es als Conidurblech® bekannt ist bzw. eine entsprechende gleichwirkende Konstruktion aufweist.

Der Kristallisationsstufe 45 ist die Kristallisationsstufe 62 nachgeordnet, deren Eintrittsöffnung der Austrittsöffnung des Trichters 46 bzw. dessen Basiskörpers 47entspricht. Die Kristallisationsstufe 62 ist in einem weiteren Kreislauf 84 angeordnet, durch den ein Teil der der Kristallisationsstufe 62 entnommenen kristallisierten Kugeln in den Bereich des Trichters 46 zurückgeführt wird. Hierdurch ergibt sich der Vorteil, dass die der Kristallisationsstufe 62 entnommenen und der Nachkondensationsstufe 18 zuzuführenden Kugel in einem Umfang kristallisiert sind, dass ein Zusammenkleben besonders im Trichter 46 unterbleibt. Insbesondere werden in etwa 10 - 50 % der über eine Leitung 86 der Kristallisationseinrichtung 62 entnommenen Kugeln über den Kreislauf 84 in den Trichter 46 zurückgeführt.

Die Leitung 86 führt zu einer Schleuse 88, die ein- und auslassseitig von einem Absperrelement 90, 92 verschliessbar ist, die vorzugsweise als Irisblende oder Zellrandschleuse ausgebildet ist. Hierdurch ist sichergestellt, dass ein Zerstören der Kugeln unterbleibt. Ist die Schleuse 88 im erforderlichen Umfang mit kristallisierten Kugeln gefüllt, so werden die Absperreinrichtungen 90, 92 geschlossen und in der Schleuse 88 wird ein Druck aufgebaut, der dem der nachfolgenden Kondensationsstufe 18 entspricht. In dieser herrscht üblicherweise ein Druck von 0,5 mbar (abs.). Nach Erreichen des erforderlichen Unterdrucks wird das Absperrorgan 92 geöffnet, so dass die Kugeln an die Nachkondensationsstufe in Form einer sich langsam drehenden Schnecke 94 übergeben werden können, ohne dass die Gefahr eines Sauerstoffeinbruchs erfolgt. In der Nachpolykondensationsstufe 18 erfolgt unter Vakuum und Sauerstoffausschluss die gewünschte Nachkondensation, wobei dann, wenn ein Kettenverlängerer dem schmelzflüssigen Prepolymer zugegeben wurde (Leitung 16) eine Verkürzung auf 8 - 12 Stunden im Vergleich von 15-25 Stunden ohne Kettenverlängerer erfolgt. Die Nachpolykondensationsstufe 18 umfasst erwähntermnassen die sich sehr langsam drehende Schnecke 94 und ist umfangsseitig von einem Heizmantel 96 umgeben. Nach Abschluss der Polykondensation werden die Kugeln einer weiteren Schleuse 98 zugeführt, die vom Aufbau der Schleuse 88 entspricht und infolgedessen auch vor- oder nachgeschaltet ein Absperrelement 100, 102 in Form einer Irisblende aufweisen kann.

Die in den aus der Schleuse 88 über eine Leitung 104 und die aus der ummittelbar mit der Nachpolykondensationsstufe 18 verbundenen Leitung 106 abgeführten Gasen enthaltenen Reaktionsprodukte wie Ethylenglykol bzw. Butandiol, Wasser, Oligomere oder Acetaldehyd bzw. Tetrahydrofuran, werden in gewohnter Weise in einem Glykolkreislauf 108 bzw. in einer Unterdruckeinheit 110 abgeschieden und sodann zur Wiederverwendung aufbereitet werden. Insoweit wird jedoch auch auf hinlänglich bekannte Techniken verwiesen.

Die erfindungsgemässe Lehre bezüglich Verfahren und Anordnungen zum Herstellen von insbesondere PET- bzw. PTB-Kugeln ermöglicht, dass
➢ dann, wenn eine Vor- bzw. Ankristallisation von Tropfen innerhalb eines Fallturms erfolgen soll, anstelle von Luft oder Gas ein Sprühnebel benutzt wird, der mit einer Anströmgeschwindigkeit durch den Fallturm in Gegenstrom geführt wird, dass eine Verwirbelung unterbleibt,
➢ nach relativ kurzer Fallstrecke eine Verfestigung der Kügelchen und genaue Einstellung der Produkttemperatur erfolgt,
➢ eine Vorkristallisation in einem als Trichter ausgebildeten der Fallstrecke nachgeordneten Abschnitt der Anordnung erfolgt, in dem die Tropfen derart verwirbelt werden, dass weder ein Anhaften an einer Wandung erfolgt, noch Tropfen selbst zusammenbacken,
➢ unmittelbar vor dem Vertropfen des schmelzflüssigen Prepolymers bzw. Polymers ein Kettenverlängerer zugegeben wird, der seine Wirkung dem Grunde nach erst in einer Nachpolykondensationsstufe entfaltet.

### Bezugszeichenliste

- 10: Düsenplatte
- 12: Fallturm
- 14 -: Leitung
- 16: Leitung
- 18: Nachkondensation
- 20: Düsenanordnung
- 22: Polymertropfen
- 24: Pfeil
- 26: Gasabsaugvorrichtung
- 28: Innenwand
- 30: Kreislauf
- 32: Gebläse
- 34: Kodensator
- 36: Anschluss
- 38: Pumpe
- 40: Leitung
- 42: Leitung
- 44: unterer Abschnitt
- 45: Kristallisationsstufe
- 46: Trichter
- 47: Basiskörper
- 48: Innenwand
- 50: tuchförmiges Element
- 52: Zwischenraum
- 53: Anschluss
- 56: Anschluss
- 68: gedehnte Position

- 60: Grundposition
- 61: Kristallisationsstufe
- 64: Kreislauf
- 66: dehnbare Klappe
- 68: Wärmetauscher
- 70: Gebläse
- 72: Leitung
- 74: Reinigungsstufe
- 76: Glykolkreislauf
- 78: Leitung
- 80: Leitung
- 82: Gasverteilungsvorrichtung
- 84: Kreislauf
- 86: Leitung
- 88: Schleuse
- 90: Absperrelement
- 92: Absperrelement
- 94: Schnecke
- 96: Heizmantel
- 98: Schleuse
- 100: Absperrelement
- 102: Absperrelement
- 104: Leitung
- 106: Leitung
- 108: Glykolkreislauf
- 110: Unterdruckeinheit
- A: Abstand

## Patentansprüche

1. Verfahren zur Herstellung kugelförmiger Partikel aus einer Schmelze aus Kunststoff, insbesondere Prepolymer bzw. Polymerschmelze eines Polykondensates, z. B. PET, PBT, PEN, PA oder PC, wobei die Schmelze mittels einer Vertropfungsdüse mit einer Vielzahl von Schmelze-Austrittsöffnungen zu Tropfen vertropft wird und die Tropfen nach Durchfallen zumindest eines Teils einer Fallstrecke zu Partikeln verfestigt werden, **dadurch gekennzeichnet, dass** die Partikel am Ende der Fallstrecke in einen Aufnahmebereich gelangen, in dem zumindest ein Teil der Partikel derart verwirbelt wird, dass Turbulenzen zum Bewegen der Partikel in Richtung Bereichsmitte entstehen, und dass die Partikel in der Fallstrecke mit einer Flüssigkeit beaufschlagt werden.

2. Verfahren nach Anspruch 1, **dadurch gekennzeichnet, dass** in dem Aufnahmebereich die Partikel durch Vibrieren zumindest eines Teils des Aufnahmebereichs verwirbelt werden.

3. Verfahren nach Anspruch 1 oder 2, **dadurch gekennzeichnet, dass** in dem Aufnahmebereich die Partikel durch Einblasen eines Gases durch eine Vielzahl von Begasungslöchern verwirbelt werden.

4. Verfahren nach einem der vorhergehenden Ansprüche, **dadurch gekennzeichnet, dass** die Partikel in dem Aufnahmebereich mittels eines durch Gas durchsetzten und in Schwingungen versetzten tuchartigen Elements verwirbelt und/oder einem Bereich mit einem eigensteifen Element am Ende der Fallstrecke zugeführt werden, der von Gas derart beaufschlagt wird, dass Turbulenzen zum Bewegen der Tropfen in Richtung Bereichsmitte entstehen.

5. Verfahren nach einem der vorhergehenden Ansprüche, **dadurch gekennzeichnet, dass** die verwirbelten Partikel ein Wirbelbett bilden.

6. Verfahren nach Anspruch 5, **dadurch** gekenntzeichnet, dass die Partikel dem Wirbelbett über einen Wirbelbett-Eintrittsbereich aus der Fallstrecke zugeführt werden und darin zu einem Wirbelbett-Austrittsbereich bewegt werden, in dem sich die Bereichsaustrittsöffnung befindet.

7. Verfahren nach Anspruch 6, **dadurch gekennzeichnet, dass** die Partikel am Ende der Fallstrecke zu dem Wirbelbett-Eintrittsbereich gelenkt werden.

8. Verfahren nach Anspruch 1, **dadurch gekennzeichnet, dass** die Partikel am Ende der Fallstrecke in einen Aufnahmebereich gelangen, in dem zumindest ein Teil der Partikel derart verwirbelt wird, dass Turbulenzen zum Bewegen der Partikel in Richtung Bereichsmitte entstehen.

9. Verfahren nach einem der vorhergehenden Ansprüche, **dadurch gekennzeichnet, dass** die Verdampfungstemperatur der Flüssigkeit unter der Schmelztemperatur der Partikel liegt.

10. Verfahren nach zumindest einem der vorhergehenden Ansprüche, **dadurch gekennzeichnet, dass** die Flüssigkeit Wasser und/oder Ethylenglycol aufweist.

11. Verfahren nach zumindest einem der vorhergehenden Ansprüche, **dadurch gekennzeichnet, dass** die Flüssigkeit in Form feiner Tröpfchen zerstäubt wird, so dass die mittels der Vertropfungsdüse vertropften Tropfen in der Fallstrecke mit einem Sprühnebel beaufschlagt werden, wobei der Sprühnebel derart eingestellt wird, dass dessen Tropfengrösse in etwa 1/3 bis 1/20 der Tropfengrösse der vertropften Schmelze entspricht.

12. Verfahren nach Anspruch 11, **dadurch gekennzeichnet, dass** die Flüssigkeit in einem Trägergas zugeführt wird.

13. Verfahren nach Anspruch 12, **dadurch gekennzeichnet, dass** das Trägergas mindestens eines der Gase Luft, Stickstoff, Kohlendioxid, Argon, Wasserdampf oder Ethylenglycol-Dampf aufweist.

14. Verfahren nach einem der vorhergehenden Ansprüche, **dadurch gekennzeichnet, dass** die Tropfen nach Durchfallen zumindest eines Teils der Fallstrecke zumindest ankristallisiert werden.

15. Verfahren, nach einem der vorhergehenden Ansprüche, **dadurch gekennzeichnet, dass** die Tropfen nur soweit abgekühlt werden, dass ihre Temperatur über der Glasübergangstemperatur Tg des Kunststoffs bleibt.

16. Verfahren nach einem der vorhergehenden Ansprüche, **dadurch gekennzeichnet, dass** die thermische Energie der in der Fallstrecke vorliegenden Prozessgase wie Luft, Stickstoff, Kohlendioxid, Argon, Wasserdampf oder Ethylenglycol-Dampf zurückgewonnen wird.

17. Verfahren nach einem der vorhergehenden Ansprüche, **dadurch gekennzeichnet, dass** die kugelförmigen oder kugelähnliche Partikel nach dem Verlassen des Aufnahmebereichs einer Kristallisationsstufe zugeführt werden.

18. Verfahren nach einem der vorhergehenden Ansprüche, **dadurch gekennzeichnet, dass** die kugelförmigen Partikel nach dem Durchlaufen der einen oder mehreren Kristallisationsstufen einer Nachkondensationsstufe zur Festphasen-Polykondensation zugeführt werden.

19. Verfahren nach einem der vorhergehenden Ansprüche, **dadurch** gekenntzeichnet, dass die Tropfen aus der Vertropfungsdüse in einem kranzförmigen Aussenbereich der Vertropfungsdüse abgegeben werden,

20. Verfahren nach eine der vorhergehenden Ansprüche, **dadurch gekennzeichnet, dass** zumindest ein Teil der aus der Vertropfungsdüse abgegebenen Tropfen eine Bewegungs-Komponente in horizontaler Richtung hat.

21. Verfahren nach einem der vorhergehenden Ansprüche, **dadurch gekennzeichnet, dass** der Aufnahmebereich mit Gas wie Luft impulsartig beaufschlagt wird.

22. Verfahren nach einem der vorhergehenden Ansprüche, **dadurch gekennzeichnet, dass** der Aufnahmebereich trichterförmig ausgebildet ist und tropfenseitig derart verlaufende und von dem Gas durchsetzte Öffnungen aufweist, dass die Tropfen tangential entlang der Innenfläche des trichterförmigen Bereichs bewegt bzw. verwirbelt werden.

23. Verfahren nach einem der vorhergehenden Ansprüche, **dadurch gekennzeichnet, dass** das Gas mit einem sinusförmigen Druckverlauf den Aufnahmebereich beaufschlagt.

24. Verfahren nach einem der vorhergehenden Ansprüche, **dadurch gekennzeichnet, dass** das Gas impulsartig den Aufnahmebereich mit einer Frequenz f mit vorzugsweise 1 Hz ≤ f ≤ 30 Hz, insbesondere 1 Hz ≤ f ≤ 10 Hz beaufschlagt.

25. Verfahren nach einem der vorhergehenden Ansprüche, **dadurch gekennzeichnet, dass** das Gas den Aufnahmereich mit einer Maximalgeschwindigkeit v mit v ≤ 4 m/sec, insbesondere v ≤ 3 m/sec, vorzugsweise v ≤ 1 m/sec durchsetzt.

26. Verfahren nach einem der vorhergehenden Ansprüche, **dadurch gekennzeichnet, dass** das Gas den Aufnahmebereich mit einem Druck p mit 0 mbar ≤ p ≤ 200 mbar, insbesondere 0 mbar ≤ p ≤ 150 mbar über Atmosphärendruck beaufschlagt.

27. Verfahren nach einem der vorhergehenden Ansprüche, **dadurch gekennzeichnet, dass** in dem Aufnahmebereich Öffnungen mit einer Maschenweite d < 80%, insbesondere d < 30% der mittleren Partikeldurchmesser verwendet werden.

28. Verfahren nach einem der vorhergehenden Ansprüche, **dadurch gekennzeichnet, dass** der Kristallisationseinrichtung ein Teil der zu Kugeln kristallisierten oder zumindest ankristallisierten Partikel entnommen und oberhalb des Aufnahmebereichs den die Fallstrecke durchfallenden Tropfen wieder zugeführt wird.

29. Verfahren nach einem der vorhergehenden Ansprüche, **dadurch gekennzeichnet, dass** etwa 10 bis 50% der der Kristallisationseinrichtung entnommenen Kügelchen in den Aufnahmebereich zurück geführt werden.

30. Verfahren nach einem der vorhergehenden Ansprüche, **dadurch gekennzeichnet, dass** der Schmelze unmittelbar vor dem Ver tropfen ein die Nachkondensation beschleunigender Kettenverlängerer beigegeben wird.

31. Verfahren nach einem der vorhergehenden Ansprüche, **dadurch gekennzeichnet, dass** der Anteil des Kettenverlängerers in der zu vertropfenden Schmelze < 0.5 Gew% beträgt.

32. Verfahren nach einem der vorhergehenden Ansprüche, **dadurch gekennzeichnet, dass** der Kettenverlängerer der Schmelze in einer Menge zugegeben wird, dass seine Wirkung nach einer Zeit t₁ mit t₁ ≤ 10 min, insbesondere 1 min ≤ t₁ ≤ 10 min einsetzt.

33. Verfahren nach einem der vorhergehenden Ansprüche, **dadurch gekennzeichnet, dass** als Kettenverlängerer ein solcher auf der Basis von Polyol, Dianhydrid einer Tetracarbonsäure, Pentaerythrit oder oxazolinen verwendet wird.

34. Verfahren nach einem der vorhergehenden Ansprüche, **dadurch gekennzeichnet, dass** die Tropfen in zumindest einem Teil der Fallstrecke einem Gegenstrom ausgesetzt werden, der vorzugsweise laminar ist.

35. Verfahren nach einem der vorhergehenden Ansprüche, **dadurch gekennzeichnet, dass** die Tropfen in zumindest einem Teil der Fallstrecke einem Gleichstrom ausgesetzt werden, der vorzugsweise laminar ist.

36. Verfahren nach einem der vorhergehenden Ansprüche, **dadurch gekennzeichnet, dass** der Gegenstrom mit einer Geschwindigkeit von weniger als 0,2 m/sec, vorzugsweise weniger als 0,1 m/sec, abgezogen wird.

37. Verfahren nach einem der vorhergehenden Ansprüche, **dadurch gekennzeichnet, dass** der Gleichstrom mit einer Geschwindigkeit von weniger als 1 m/sec, vorzugsweise weniger als 0,5 m/sec abgezogen wird.

38. Verfahren nach einem der vorhergehenden Ansprüche, **dadurch gekennzeichnet, dass** das den Aufnahmebereich durchsetzende Gas einen ersten Kreislauf durchströmt, wobei ein Anteil des Gases einer Reinigungsstation zugeführt wird, in der das Gas gereinigt und gekühlt wird, um anschliessend dem Kreislauf wieder zugeführt zu werden.

39. Verfahren nach einem der vorhergehenden Ansprüche, **dadurch gekennzeichnet, dass** das Gas in der Reinigungsstation im Gegenstrom bzw. Gleichstrom zu einem Glycolkreislauf geführt wird.

## Claims

1. Process for producing spherical particles made of a melt made of plastic, in particular prepolymer or polymer melt of a polycondensate, e.g. PET, PBT, PEN, PA or PC, where the melt is dropletized to give droplets by means of a dropletizing nozzle with a plurality of melt-exit apertures and the droplets are hardened to give particles after falling through at least one portion of a falling section, **characterized in that**, at the end of the falling section, the particles pass into a receiver region in which at least a portion of the particles is fluidized in such a way that turbulence is produced that moves the particles in the direction of the centre of the region, and that the particles in the falling section are brought into contact with a liquid.

2. Process according to Claim 1, **characterized in that**, in the receiver region, the particles are fluidized via vibration of at least one portion of the receiver region.

3. Process according to Claim 1 or 2, **characterized in that**, in the receiver region, the particles are fluidized via injection of a gas through a plurality of gas-supply apertures.

4. Process according to any of the preceding claims, **characterized in that** the particles, in the receiver region, are fluidized phase by means of a cloth-type element through which gas passes and which is caused to oscillate, and/or are introduced into a region with an intrinsically stiff element at the end of the falling section, where a gas is brought into contact with the said region in such a way that turbulence is produced and moves the droplets in the direction of the centre of the region.

5. Process according to any of the preceding claims, **characterized in that** the fluidized particles form a fluidized bed.

6. Process according to Claim 5, **characterized in that** the particles are introduced into the fluidized bed by way of a fluidized-bed-entry region from the falling section and are moved therein to a fluidized-bed-exit region which is the location of the opening for exit from the region.

7. Process according to Claim 6, **characterized in that** the particles at the end of the falling section are guided to the fluidized-bed-entry region.

8. Process according to Claim 1, **characterized in that** the particles at the end of the falling section pass into a receiver region in which at least a portion of the particles is fluidized in such a way that turbulence is produced and moves the particles in the direction of the centre of the region.

9. Process according to any of the preceding claims, **characterized in that** the vaporization temperature of the liquid is below the melting point of the particles.

10. Process according to at least one of the preceding claims, **characterized in that** the liquid comprises water and/or ethylene glycol.

11. Process according to at least one of the preceding claims, **characterized in that** the liquid is atomized in the form of fine droplets so that the droplets dropletized by means of the dropletizing nozzle come into contact, in the falling section, with a spray mist, where the spray mist is adjusted in such a way that the size of its droplets is about 1/3 to 1/20 of the size of the droplets of the dropletized melt.

12. Process according to Claim 11, **characterized in that** the liquid is introduced within a carrier gas.

13. Process according to Claim 12, **characterized in that** the carrier gas comprises at least one of the following gases: air, nitrogen, carbon dioxide, argon, water vapour or ethylene glycol vapour.

14. Process according to any of the preceding claims, **characterized in that** the droplets are subjected to at least incipient crystallization after they have fallen through at least one portion of the falling section.

15. Process according to any of the preceding claims, **characterized in that** the cooling of the droplets takes place only to the extent that their temperature remains above the glass transition temperature Tg of the plastic.

16. Process according to any of the preceding claims, **characterized in that** the thermal energy of the process gases present in the falling section, e.g. air, nitrogen, carbon dioxide, argon, water vapour or ethylene glycol vapour, is reclaimed.

17. Process according to any of the preceding claims, **characterized in that** the spherical or near-spherical particles are introduced to a crystallization stage after they leave the receiver region.

18. Process according to any of the preceding claims, **characterized in that** the spherical particles are introduced into a postcondensation stage for the solid-phase polycondensation process after they have passed through the one or more crystallization stages.

19. Process according to any of the preceding claims, **characterized in that** the droplets from the dropletizing nozzle are dissipated within a circular external region of the dropletizing nozzle.

20. Process according to any of the preceding claims, **characterized in that** at least a portion of the droplets dissipated from the dropletizing nozzle has a component of movement in a horizontal direction.

21. Process according to any of the preceding claims, **characterized in that** gas, such as air, is brought into contact in the manner of pulses with the receiver region.

22. Process according to any of the preceding claims, **characterized in that** the receiver region has been designed in the shape of a funnel and on the side relating to the droplets it has openings through which the gas passes and which run in such a way that the droplets are fluidized or, respectively, moved tangentially along the internal area of the funnel-shaped region.

23. Process according to any of the preceding claims, **characterized in that** the pressure curve of the gas, when it comes into contact with the receiver region, is sinusoidal.

24. Process according to any of the preceding claims, **characterized in that** the gas comes into contact with the receiver region in the manner of pulses with a frequency f which is preferably 1 Hz ≤ f ≤ 30 Hz, in particular 1 Hz ≤ f ≤ 10 Hz.

25. Process according to any of the preceding claims, **characterized in that** the maximum velocity v with which the gas passes through the receiver region is v ≤ 4 m/sec, in particular v ≤ 3 m/sec, preferably v ≤ 1 m/sec.

26. Process according to any of the preceding claims, **characterized in that** the pressure p of the gas when it comes into contact with the receiver region is 0 mbar ≤ p ≤ 200 mbar, in particular 0 mbar ≤ p ≤ 150 mbar above atmospheric pressure.

27. Process according to any of the preceding claims, **characterized in that** openings with a mesh width d < 80%, in particular d < 30%, of the average particle diameter are used in the receiver region.

28. Process according to any of the preceding claims, **characterized in that** a portion of the particles at least incipiently crystallized or crystallized to give spheres is removed from the crystallization device and, above the receiver region, is reintroduced into the droplets falling through the falling section.

29. Process according to any of the preceding claims, **characterized in that** about 10 to 50% of the spherical beads removed from the crystallization device are returned to the receiver region.

30. Process according to any of the preceding claims, **characterized in that**, immediately prior to the dropletization process, a chain extender that accelerates the postcondensation process is added to the melt.

31. Process according to any of the preceding claims, **characterized in that** the proportion of the chain extender in the melt to be dropletized is < 0.5% by weight.

32. Process according to any of the preceding claims, **characterized in that** the amount of the chain extender added to the melt is such that it begins to take effect after a time t₁, where t₁ ≤ 10 min, in particular 1 min ≤ t₁ ≤ 10 min.

33. Process according to any of the preceding claims, **characterized in that** the chain extender used comprises one based on polyol, on dianhydride of a tetracarboxylic acid, on pentaerythritol or on oxazolines.

34. Process according to any of the preceding claims, **characterized in that**, in at least one portion of the falling section, the droplets are exposed to a counter flow which is preferably laminar.

35. Process according to any of the preceding claims, **characterized in that**, in at least one portion of the falling section, the droplets are exposed to a cocurrent flow which is preferably laminar.

36. Process according to any of the preceding claims, **characterized in that** the velocity with which the counter flow is withdrawn is less than 0.2 m/sec, preferably less than 0.1 m/sec.

37. Process according to any of the preceding claims, **characterized in that** the velocity with which the cocurrent flow is withdrawn is less than 1 m/sec, preferably less than 0.5 m/sec.

38. Process according to any of the preceding claims, **characterized in that** the gas passing through the receiver region flows through a first circuit, where a portion of the gas is introduced into a scrubber unit in which the gas is scrubbed and cooled, in order then to be reintroduced into the circuit.

39. Process according to any of the preceding claims, **characterized in that**, in the scrubber unit, the gas is conducted countercurrently or cocurrently with respect to a glycol circuit.

## Revendications

1. Procédé de production de particules sphériques à partir de matière synthétique fondue, en particulier d'un prépolymère ou d'un polymère fondu de polycondensat, par exemple du PET, du PBT, du PEN, du PA ou du PC, la matière fondue étant transformée en gouttes au moyen d'une tuyère d'égouttage qui présente plusieurs ouvertures de sortie de matière fondue et les gouttes étant solidifiées en particules après avoir parcouru au moins une partie d'un parcours de chute, **caractérisé en ce que**
à la fin du parcours de chute, les particules passent dans une zone de reprise dans laquelle au moins une partie des particules est tourbillonnée de telle sorte que les turbulences qui déplacent les particules surviennent en direction du milieu de la zone et
**en ce qu'**un liquide est projeté sur les particules dans le parcours de chute.

2. Procédé selon la revendication 1, **caractérisé en ce que** les particules sont tourbillonnées dans la zone de reprise en faisant vibrer au moins une partie de la zone de reprise.

3. Procédé selon les revendications 1 ou 2, **caractérisé en ce que** les particules sont tourbillonnées dans la zone de reprise par soufflage d'un gaz par plusieurs trous d'amenée de gaz.

4. Procédé selon l'une des revendications précédentes, **caractérisé en ce que** les particules sont tourbillonnées dans la zone de reprise au moyen d'un élément en forme de toile traversé par un gaz et mis en vibration et/ou sont amenées dans une zone située à l'extrémité du parcours de chute et dotée d'un élément intrinsèquement rigide sur lequel un gaz est projeté de telle sorte que surviennent des turbulences qui déplacent les gouttes en direction du milieu de la zone.

5. Procédé selon l'une des revendications précédentes, **caractérisé en ce que** les particules tourbillonnées forment un lit fluidisé.

6. Procédé selon la revendication 5, **caractérisé en ce que** les particules provenant du parcours de chute sont amenées dans le lit fluidisé par une zone d'entrée du lit fluidisé et y sont déplacées dans une zone de sortie du lit fluidisé dans laquelle se trouve l'ouverture de sortie de la zone.

7. Procédé selon la revendication 6, **caractérisé en ce qu'**à la fin du parcours de chute, les particules sont déviées vers la zone d'entrée du lit fluidisé.

8. Procédé selon la revendication 1, **caractérisé en ce qu'**à la fin du parcours de chute, les particules passent dans une zone de reprise dans laquelle au moins une partie des particules est tourbillonnée de telle sorte que surviennent des turbulences qui déplacent les particules en direction du milieu de la zone.

9. Procédé selon l'une des revendications précédentes, **caractérisé en ce que** la température d'évaporation du liquide est plus basse que la température de fusion des particules.

10. Procédé selon au moins l'une des revendications précédentes, **caractérisé en ce que** le liquide présente de l'eau et/ou de l'éthylène glycol.

11. Procédé selon au moins l'une des revendications précédentes, **caractérisé en ce que** le liquide est pulvérisé sous la forme de fines gouttelettes de telle sorte que dans le parcours de chute, un nuage de pulvérisation soit projeté sur les gouttes formées au moyen de la tuyère d'égouttage, le nuage de pulvérisation étant établi de telle sorte que la taille de ses gouttelettes corresponde à environ 1/3 à 1/20 de la taille des gouttes de matière fondue.

12. Procédé selon la revendication 11, **caractérisé en ce que** le liquide est amené dans un gaz porteur.

13. Procédé selon la revendication 12, **caractérisé en ce que** le gaz porteur présente au moins un des gaz que sont l'air, l'azote, le dioxyde de carbone, l'argon, la vapeur d'eau ou la vapeur d'éthylène glycol.

14. Procédé selon l'une des revendications précédentes, **caractérisé en ce qu'**après avoir parcouru au moins une partie du parcours de chute, les gouttes entament au moins leur cristallisation.

15. Procédé selon l'une des revendications précédentes, **caractérisé en ce que** les gouttes ne sont refroidies que jusqu'à ce que leur température soit située au-dessus de la température de transition vitreuse Tg de la matière synthétique.

16. Procédé selon l'une des revendications précédentes, **caractérisé en ce que** l'énergie thermique du gaz de traitement présent dans le parcours de chute, par exemple l'air, l'azote, le dioxyde de carbone, l'argon, la vapeur d'eau ou la vapeur d'éthylène glycol est récupérée.

17. Procédé selon l'une des revendications précédentes, **caractérisé en ce que** les particules de forme sphérique ou de forme approximativement sphérique sont amenées à un étage de cristallisation après avoir quitté la zone de reprise.

18. Procédé selon l'une des revendications précédentes, **caractérisé en ce que** les particules de forme sphérique sont amenées à un étage de condensation finale pour le polycondensation en phase solide après avoir traversé le ou les étages de cristallisation.

19. Procédé selon l'une des revendications précédentes, **caractérisé en ce que** les gouttes sont délivrées par la tuyère d'égouttage dans une partie en couronne extérieure de la tuyère d'égouttage.

20. Procédé selon l'une des revendications précédentes, **caractérisé en ce qu'**au moins une partie des gouttes délivrées par la tuyère d'égouttage a une composante de déplacement dans la direction horizontale.

21. Procédé selon l'une des revendications précédentes, **caractérisé en ce qu'**un gaz tel que l'air est appliqué par impulsions dans la zone de reprise.

22. Procédé selon l'une des revendications précédentes, **caractérisé en ce que** la zone de reprise a la forme d'un entonnoir et présente des ouvertures qui s'étendent du côté des gouttes et traversées par le gaz, de telle sorte que les gouttes sont déplacées ou tourbillonnées tangentiellement le long de la surface intérieure de la partie en forme d'entonnoir.

23. Procédé selon l'une des revendications précédentes, **caractérisé en ce que** le gaz est amené dans la zone de reprise à une pression qui évolue sinusoïdalement.

24. Procédé selon l'une des revendications précédentes, **caractérisé en ce que** le gaz est amené dans la zone de reprise par impulsions d'une fréquence f, avec de préférence 1 Hz ≤ f ≤ 30 Hz et en particulier 1 Hz ≤ f ≤ 10 Hz.

25. Procédé selon l'une des revendications précédentes, **caractérisé en ce que** le gaz traverse la zone de reprise à une vitesse maximale v, avec v ≤ 4 m/s, en particulier v ≤ 3 m/s et de préférence v ≤ 1 m/s.

26. Procédé selon l'une des revendications précédentes, **caractérisé en ce que** le gaz est amené dans la zone de reprise à une pression p telle que 0 mbar ≤ p ≤ 200 mbars et en particulier 0 mbar ≤ p ≤ 150 mbars au-dessus de la pression atmosphérique.

27. Procédé selon l'une des revendications précédentes, **caractérisé en ce que** des ouvertures d'une maille d < 80 %, en particulier d < 30 % du diamètre moyen des particules sont utilisées dans la zone de reprise.

28. Procédé selon l'une des revendications précédentes, **caractérisé en ce qu'**une partie des particules cristallisées en billes ou au moins ayant entamé leur cristallisation sont prélevées dans le dispositif de cristallisation et sont renvoyées au-dessus de la zone de reprise dans les gouttes qui tombent dans le parcours de chute.

29. Procédé selon l'une des revendications précédentes, **caractérisé en ce qu'**environ 10 à 50 % des billes prélevées dans le dispositif de cristallisation sont renvoyées dans la zone de reprise.

30. Procédé selon l'une des revendications précédentes, **caractérisé en ce qu'**immédiatement avant l'égouttage, un agent de prolongation des chaînes qui accélère la condensation finale est ajouté à la matière fondue.

31. Procédé selon l'une des revendications précédentes, **caractérisé en ce que** la teneur en agent de prolongation des chaînes dans la matière fondue à égoutter est < 0,5 % en poids.

32. Procédé selon l'une des revendications précédentes, **caractérisé en ce que** l'agent de prolongation des chaînes est ajouté à la matière fondue en une quantité telle que son effet s'établisse après une durée t₁, t₁ ≤ 10 min et en particulier 1 min ≤ t₁ ≤ 10 min.

33. Procédé selon l'une des revendications précédentes, **caractérisé en ce qu'**il utilise comme agent de prolongation des chaînes un agent de prolongation des chaînes à base de polyol, de dianhydride d'acide tétracarboxylique, de pentaérythritol ou d'oxazolines.

34. Procédé selon l'une des revendications précédentes, **caractérisé en ce que** dans au moins une partie du parcours de chute, les gouttes sont exposées à un contre-courant de préférence laminaire.

35. Procédé selon l'une des revendications précédentes, **caractérisé en ce que** dans au moins une partie du parcours de chute, les gouttes sont exposées à un co-courant de préférence laminaire.

36. Procédé selon l'une des revendications précédentes, **caractérisé en ce que** le contre-courant est extrait à une vitesse inférieure à 0,2 m/s et de préférence inférieure à 0,1 m/s.

37. Procédé selon l'une des revendications précédentes, **caractérisé en ce que** le co-courant est extrait à une vitesse inférieure à 1 m/s et de préférence inférieure à 0,5 m/s.

38. Procédé selon l'une des revendications précédentes, **caractérisé en ce que** le gaz qui traverse la zone de reprise parcourt un premier circuit dans lequel une partie du gaz est amenée à un poste de nettoyage dans lequel le gaz est nettoyé et refroidi avant d'être renvoyé dans le circuit.

39. Procédé selon l'une des revendications précédentes, **caractérisé en ce que** le gaz est amené dans le poste de nettoyage à contre-courant ou à co-courant par rapport à un circuit de glycol.
